# FASCICULE DE BREVET EUROPEEN

(11) **EP 4 408 677 B1**
(45) Date de publication et mention de la délivrance du brevet: **13.08.2025**
(21) Numéro de dépôt: 22793192.0
(22) Date de dépôt: 26.09.2022
(51) Int. Cl.: B60C 1/00, C08L 7/00, B60C 11/03

(54) **ARTICLE EN CAOUTCHOUC RESISTANT AUX AGRESSIONS MECANIQUES**
ARTIKEL AUS GEGEN MECHANISCHEN ANGRIFF BESTÄNDIGEM GUMMI
ITEM MADE OF RUBBER THAT IS RESISTANT TO MECHANICAL ATTACK

(30) Priorité: 30.09.2021 FR 2110336
(43) Date de publication de la demande: 07.08.2024
(73) Titulaire: COMPAGNIE GENERALE DES ETABLISSEMENTS MICHELIN, 63000 Clermont-Ferrand (FR)
(72) Inventeur: LIBERT, Romain, 63040 CLERMONT-FERRAND Cedex 9 (FR); WAECKERLE, Nicolas, 63040 CLERMONT-FERRAND Cedex 9 (FR)
(74) Mandataire: M.F.P. Michelin
(86) Numéro de dépôt international: PCT/FR2022/051799
(87) Numéro de publication internationale: WO 2023/052712

(56) Documents cités:
- WO-A1-2013/011111
- WO-A1-2018/211734

## Description

La présente invention est relative à des articles en caoutchouc, en particulier des pneumatiques pour véhicules de génie civil, des chenilles ou des bandes transporteuses, qui doivent présenter une bonne résistance aux agressions mécaniques.

Les pneumatiques de véhicules de génie civil doivent posséder des caractéristiques techniques très différentes des pneumatiques destinés à des véhicules roulant exclusivement sur route (c'est-à-dire un sol bitumeux), car la nature des sols hors la route sur lesquels ils évoluent principalement est très différente, et notamment beaucoup plus agressive, de par sa nature caillouteuse. Par ailleurs, contrairement à des pneumatiques pour véhicules de tourisme par exemple, les pneumatiques pour les gros engins de génie civil doivent pouvoir supporter une charge qui peut être extrêmement lourde. Par conséquent, les solutions connues pour les pneumatiques roulant sur sol bitumeux ne sont pas directement applicables à des pneumatiques hors la route tels que des pneumatiques pour véhicules de génie civil.

Usuellement, les bandes de roulement de pneumatique de véhicules de génie civil sont constituées de caoutchouc naturel à titre d'élastomère. Ces bandes de roulement sont connues pour présenter une bonne résistance à l'usure, tout en présentant de bonnes performances hystérétiques pour l'application concernée, évitant une montée excessive en température du pneumatique.

Au cours du roulage, une bande de roulement subit des sollicitations mécaniques et des agressions résultant du contact direct avec le sol. Dans le cas d'un pneumatiques monté sur un véhicule portant de lourdes charges, les sollicitations mécaniques et les agressions subies par le pneumatique se trouvent amplifiées sous l'effet du poids qu'il supporte. Les pneumatiques pour véhicules miniers en particulier sont soumis à des sollicitations fortes, à la fois au niveau local : roulage sur les macro-indenteurs représentés par les cailloux qui constituent les pistes (roche concassée), et au niveau global : passage de couple important car les pentes des pistes pour entrer ou sortir des « pits », ou mines à ciel ouvert, sont de l'ordre de 10%, et sollicitations fortes des pneus lors des demi-tours des véhicules pour les manœuvres de chargement et déchargement.

Ceci a pour conséquence que les amorces de fissure, qui se créent dans la bande de roulement du pneumatiques sous l'effet de ces sollicitations et de ces agressions, ont tendance à se propager davantage en surface ou à l'intérieur de la bande de roulement, pouvant provoquer des arrachements localisés ou généralisés de la bande de roulement. Ces sollicitations peuvent donc entraîner un endommagement de la bande de roulement et donc réduire la durée de vie de la bande de roulement, et donc du pneumatiques. Un pneumatique roulant sur un sol caillouteux est très exposé aux agressions mécaniques, et donc aux amorces de fissure et coupures. Ceci est particulièrement vrai pour les pneumatiques équipant les véhicules de génie civil qui évoluent généralement dans des mines ou des carrières.

Il est donc important de disposer de pneumatiques pour des véhicules destinés à rouler sur des sols caillouteux et portant de lourdes charges, dont la bande de roulement présente une résistance à l'initiation et/ou à la propagation de fissure suffisamment forte pour améliorer la durée de vie de la bande de roulement.

Par ailleurs, il demeure intéressant que les solutions proposées pour résoudre ce problème ne pénalisent pas les autres propriétés de la composition de caoutchouc, notamment l'hystérèse traduisant la capacité de dissipation thermique de la composition. En effet, l'utilisation d'une composition trop hystérétique dans un pneumatique peut se manifester par une élévation de la température interne du pneumatique, ce qui peut entraîner une diminution de l'endurance (en anglais « durability ») du pneumatique.

Au vu de ce qui précède, il existe un objectif permanent d'améliorer la résistance aux agressions mécaniques des compositions de bandes de roulement de pneumatique de véhicules de génie civil à base de caoutchouc naturel, de préférence sans trop pénaliser les performances hystérétiques. Ainsi, l'amélioration du compromis de performances entre la résistance aux agressions et l'hystérèse reste une préoccupation constante des manufacturiers, notamment dans le domaine des pneumatiques pour véhicules de génie civil.

Ce compromis de performances est également intéressant pour les chenilles en caoutchouc destinées à équiper des véhicules de chantier ou véhicules agricoles pour les mêmes raisons qu'exposées ci-dessus. Il est également intéressant pour les bandes transporteuses (ou convoyeur à bande) qui peuvent réceptionner de grosses quantités de terre, minerai, cailloux, roches et qui peuvent dissiper énormément d'énergie via la dissipation interne au matériau constitutif de la bande lors du poinçonnement de la bande entre son chargement et le support l'entrainant.

Des solutions ont été apportées pour améliorer ce compromis. Par exemple, la demande WO 2016/202970 A1 qui propose d'utiliser une composition spécifique dont la matrice élastomérique comprend un élastomère diénique choisi dans le groupe constitué par les polybutadiènes, les copolymères de butadiène et leurs mélanges, et un élastomère thermoplastique styrénique comprenant au moins un segment rigide styrénique et au moins un segment souple diénique comprenant au moins 20% en masse d'unités diéniques conjuguées.

Or, les manufacturiers cherchent toujours des solutions pour améliorer davantage le compromis de performances entre la résistance aux agressions et l'hystérèse.

Poursuivant ses recherches, la Demanderesse a découvert de façon inattendue que l'utilisation d'un élastomère thermoplastique comprenant au moins un bloc élastomère polyéther et au moins un bloc thermoplastique non styrénique présentant une température de fusion spécifique, en présence d'un coupage spécifique de charge, dans une composition de caoutchouc comprenant majoritairement un élastomère isoprénique présentant un taux molaire de liaison 1,4-cis d'au moins 90%, permet d'améliorer la résistance aux agressions mécaniques sans pénaliser le compromis de performances entre la résistance aux agressions mécaniques et l'hystérèse.

Ainsi l'invention a pour objet un article en caoutchouc comprenant une composition à base d'au moins :
- une matrice élastomère comprenant au moins 55% en poids d'au moins un élastomère isoprénique présentant un taux molaire de liaison 1,4-cis d'au moins 90%,
- un élastomère thermoplastique comprenant au moins un bloc élastomère polyéther et au moins un bloc thermoplastique non styrénique, l'élastomère thermoplastique présentant une température de fusion, Tf, comprise dans un domaine allant de 130°C à 175°C,
- 10 à 60 pce de noir de carbone,
- 5 à 30 pce de silice, et
- un système de réticulation,

le noir de carbone représentant de 55% à 95% en poids par rapport au poids total de noir de carbone et de silice,
l'article en caoutchouc étant choisi dans le groupe constitué par les pneumatiques pour véhicule de génie civil, les chenilles et les bandes transporteuses.

### I- DÉFINITIONS

Par l'expression « composition à base de », il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par « matrice élastomère », on entend l'ensemble des élastomères de la composition. Dans le cadre de la présente invention, l'élastomère thermoplastique ne fait pas partie de la matrice élastomère.

Par l'expression « partie en poids pour cent parties en poids d'élastomère » (ou pce), il faut entendre au sens de la présente invention, la part, en masse pour cent parties de la matrice élastomère présent dans la composition de caoutchouc considérée.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente invention, on entend par pneumatique (en anglais « tyre ») un bandage pneumatique ou non-pneumatique. Un bandage pneumatique comporte usuellement deux bourrelets destinés à entrer en contact avec une jante, un sommet composé d'au moins une armature de sommet et une bande de roulement, deux flancs, le pneumatique étant renforcé par une armature de carcasse ancrée dans les deux bourrelets. Un bandage non-pneumatique, quant à lui, comporte usuellement une base, conçue par exemple pour le montage sur une jante rigide, une armature de sommet, assurant la liaison avec une bande de roulement et une structure déformable, tels que des rayons, nervures ou alvéoles, cette structure étant disposée entre la base et le sommet. De tels bandages non-pneumatique ne comprennent pas nécessairement de flanc. Des bandages non-pneumatiques sont décrits par exemples dans les documents WO 03/018332 et FR2898077. Selon l'un quelconque des modes de réalisation de l'invention, le pneumatique selon l'invention est préférentiellement un bandage pneumatique.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc.

Sauf indications contraires, toutes les valeurs de température de transition vitreuse « Tg » et de température de fusion «Tf» décrites dans la présente sont mesurées de manière connue par DSC (Differential Scanning Calorimetry) selon la norme ASTM D3418 (2015).

### II- DESCRIPTION DE L'INVENTION

### II-1 Matrice élastomère

Selon l'invention, la matrice élastomère de l'article en caoutchouc comprend au moins 55% en poids d'au moins un, c'est-à-dire un ou plusieurs, élastomère isoprénique présentant un taux molaire de liaison 1,4-cis d'au moins 90%, de préférence d'au moins 98%.

Avantageusement, l'élastomère isoprénique présentant un taux molaire de liaison 1,4-cis d'au moins 90%, de préférence d'au moins 98%, est choisi dans le groupe constitué par le caoutchouc naturel, les polyisoprènes de synthèse et leurs mélanges. De préférence, cet élastomère isoprénique et du caoutchouc naturel.

La composition de l'article en caoutchouc peut comprendre un élastomère diénique autre que l'au moins un élastomère isoprénique présentant un taux molaire de liaison 1,4-cis d'au moins 90%, mais cela n'est ni obligatoire, ni préféré.

Par « élastomère diénique », on rappelle que doit être entendu un élastomère qui est issu au moins en partie (i.e. un homopolymère ou un copolymère) de monomères diènes (monomères porteurs de deux doubles liaisons carbone-carbone, conjuguées ou non). Il peut s'agir par exemple de polybutadiène (BR), copolymère de butadiène, copolymères d'isoprène et d'un mélange de ces élastomères diénique.

Avantageusement, présentant un taux molaire de liaison 1,4-cis d'au moins 90%, de préférence de préférence le caoutchouc naturel, représente au moins 75% en poids, de préférence au moins 85% en poids, de préférence 100% en poids de la matrice élastomère de la composition. En d'autres termes, de manière préférentiel, le caoutchouc naturel est le seul élastomère de la matrice élastomère de la composition de l'article en caoutchouc selon l'invention.

### II-2 Elastomère thermoplastique

Selon l'invention, la composition de l'article en caoutchouc comprend au moins un élastomère thermoplastique comprenant au moins un bloc élastomère polyéther et au moins un bloc thermoplastique non styrénique, l'élastomère thermoplastique présentant une température de fusion (Tf) comprise dans un domaine allant de 130°C à 175°C.

De manière générale, les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

Pour les besoins de l'invention, ledit élastomère thermoplastique spécifique est un copolymère bloc comprenant au moins un bloc élastomère de type polyéther et au moins un bloc thermoplastique de type non styrénique (TPNS). Cet élastomère est aussi noté TPE à blocs polyéther et TPNS dans la présente. Dans ce qui suit, lorsqu'il est fait référence à un bloc polyéther, il s'agit donc d'un bloc élastomérique majoritairement (c'est-à-dire à plus de 50% en poids, de préférence à plus de 80 % en poids) composé d'un polymère issu de la polymérisation de monomère de type éther, et, lorsqu'il est fait référence à un bloc non styrénique, il s'agit d'un bloc composé majoritairement (c'est-à-dire à plus de 50% en poids, de préférence à plus de 80 % en poids) d'un polymère issu de la polymérisation de monomère autre que les composés styréniques (c'est à dire le styrène et les styrènes substitués et/ou fonctionnalisés).

Pour les besoins de l'invention, température de fusion (Tf) du TPE à blocs polyéther et TPNS est comprise dans un domaine allant de 130°C à 175°C. Avantageusement, la Tf du TPE à blocs polyéther et TPNS est comprise dans un domaine allant de 140°C à 170°C, de préférence de 150°C à 169°C.

Il peut être noté que la Tf du TPE à blocs polyéther et TPNS correspond à la Tf des blocs thermoplastiques du TPE.

### II-2.1 Structure du TPE à blocs polyéther et TPNS

La masse moléculaire moyenne en nombre (notée Mn) du TPE à blocs polyéther et TPNS est préférentiellement comprise entre 30 000 et 500 000 g/mol, plus préférentiellement comprise entre 40 000 et 400 000 g/mol. Ainsi, on a constaté qu'une valeur comprise dans un domaine de 50 000 à 300 000 g/mol et mieux, de 60 000 à 150 000 était particulièrement bien adaptée, notamment à une utilisation du TPE à blocs polyéther et TPNS dans un article en caoutchouc selon l'invention.

La masse moléculaire moyenne en nombre (Mn) de l'élastomère TPE à blocs polyéther et TPNS est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier. La valeur de l'indice de polydispersité Ip (rappel : Ip = Mw/Mn avec Mw masse moléculaire moyenne en poids et Mn masse moléculaire moyenne en nombre) du TPE à blocs polyéther et TPNS est de préférence inférieure à 3 ; plus préférentiellement inférieure à 2 et encore plus préférentiellement inférieure à 1,5.

Le TPE à blocs polyéther et TPNS peut se présenter sous une forme linéaire. Par exemple, le TPE à blocs polyéther et TPNS est un copolymère dibloc : bloc polyéther / bloc TPNS. Le TPE à blocs polyéther et TPNS peut aussi être un copolymère tribloc : bloc polyéther / bloc TPNS / bloc polyéther, c'est-à-dire un bloc élastomère central et de deux blocs thermoplastiques terminaux, à chacune des deux extrémités du bloc élastomère. Également, le TPE à blocs polyéther et TPNS multibloc peut être un enchaînement linéaire de blocs élastomères polyéther - blocs thermoplastiques non styréniques.

Alternativement, le TPE à blocs polyéther et TPNS utile pour les besoins de l'invention peut se présenter sous une forme étoilée à au moins trois branches. Par exemple, le TPE à blocs polyéther et TPNS peut alors se composer d'un bloc élastomère polyéther étoilé à au moins trois branches et d'un bloc thermoplastique TPNS, situé à l'extrémité de chacune des branches du bloc élastomère polyéther. Le nombre de branches de l'élastomère central peut varier, par exemple de 3 à 12, et de préférence de 3 à 6.

Alternativement, le TPE à blocs polyéther et TPNS peut se présenter sous une forme branchée ou dendrimère. Le TPE à blocs polyéther et TPNS peut alors se composer d'un bloc élastomère polyéther branché ou dendrimère et d'un bloc thermoplastique TPNS, situé à l'extrémité des branches du bloc élastomère dendrimère.

De préférence, le TPE à blocs polyéther et TPNS se présente sous une forme linéaire et multibloc.

La fraction volumique de bloc élastomère polyéther dans le TPE à blocs polyéther et TPNS est comprise dans un domaine allant de 1% à 95 %, préférentiellement de 10% à 92 %, plus préférentiellement de 30% à 90%.

La fraction volumique de bloc TPNS dans le TPE à blocs polyéther et TPNS est comprise dans un domaine allant de 5% à 99 %, préférentiellement de 8% à 90 %, plus préférentiellement de 10% à 70%.

### II-2.2 Blocs élastomères

Les blocs élastomères du TPE à blocs polyéther et TPNS pour les besoins de l'invention, peuvent être tous les élastomères de type polyéther connus de l'homme de l'art.

Ces blocs polyéther possèdent de préférence une Tg (température de transition vitreuse) mesurée par DSC selon la norme ASTM D3418 de 1999, inférieure à 25°C, préférentiellement inférieure à 10°C, plus préférentiellement inférieure à 0°C et très préférentiellement inférieure à -10°C. De manière préférentielle également, la Tg des blocs polyéther est supérieure à -100°C. Conviennent notamment, les blocs polyéther ayant une Tg comprise entre -70°C et 20°C et plus particulièrement entre -50°C et 0°C.

Au sens de la présente invention, les blocs polyéther peuvent être composés par des monomères choisis parmi les alcools ou éther cycliques, préférentiellement les alcools ou éthers cycliques aliphatiques, tels que par exemple l'éthanol ou le tétrahydrofurane. Parmi les polyéthers, on choisira préférentiellement ceux choisis dans le groupe constitué par les polytétraméthylènes glycol (PTMG), les polyéthylènes glycols (PEG), le polypropylène éther glycol (PPG), le polyhexaméthylène éther glycol, le polytriméthylenether glycol (PO3G), le poly(3-alkyltétrahydrofurane), et leurs mélanges. Très préférentiellement, le polyéther est choisi dans le groupe constitué par les polytétraméthylènes glycol (PTMG), les polyéthylènes glycols (PEG) et leurs mélanges.

Les blocs élastomères peuvent en outre comprendre des blocs polyester. Parmi les polyesters, on peut citer le polyéthylènetéréphtalate, le polybutènetéréphtalate et le polyéthylène-2,6-naphtalate, ainsi que le polybutylène succinate et le polyéthylène adipate. Ces blocs présentent avantageusement une Tg mesurée par DSC selon la norme ASTM D3418 de 2015, inférieure à 90°C, de préférence entre -70°C et 20°C et plus particulièrement entre -50°C et 0°C.

Avantageusement, les blocs élastomères du TPE à blocs polyéther et TPNS présentent au total, une masse moléculaire moyenne en nombre ("Mn") allant de 25 000 g/mol à 350 000g/mol, de préférence de 35 000 g/mol à 250 000 g/mol de manière à conférer au TPE à blocs polyéther et TPNS de bonnes propriétés élastomériques et une tenue mécanique suffisante et compatible avec l'utilisation dans l'article en caoutchouc selon l'invention.

Le bloc élastomère polyéther peut également être constitué de plusieurs blocs élastomères polyéther tels que définis ci-dessus.

### II-2.3 Blocs thermoplastiques

Les blocs thermoplastiques du TPE à blocs polyéther et TPNS sont des blocs non styréniques, c'est-à-dire de préférence des thermoplastiques issus de la polymérisation de tout monomère approprié et ne comprenant pas de monomères styréniques ou moins de 5%.

De manière préférentielle, les blocs thermoplastiques du TPE à blocs polyéther et TPNS sont des blocs choisis parmi les blocs polyamides. Très préférentiellement, les blocs thermoplastiques du TPE à blocs polyéther et TPNS sont choisis dans le groupe constitué par les polyamides de type PA6, PA11 PA12, PA4.12, PA4.14, PA4.18, PA6.10, PA6.12, PA6.14, PA6.18, PA9.12, PA10.10, PA10.12, PA10.14, PA10.18 et leurs mélanges, de préférence les blocs thermoplastiques du TPE à blocs polyéther et TPNS sont choisis dans le groupe constitué par les polyamides de type PA6, PA11, PA12 et leurs mélanges.

Les TPE à blocs polyéther et TPNS particuliers dans lesquels les blocs thermoplastiques non styréniques sont des polyamides sont usuellement notés TPE-A ou TPA (copolyamide thermoplastique) ou encore PEBA (copolyéther bloc amide), et ils sont particulièrement préférés pour les besoins de l'invention.

Selon l'invention, les blocs thermoplastiques du TPE à blocs polyéther et TPNS présentent au total, une masse moléculaire moyenne en nombre ("Mn") allant de 5 000 g/mol à 150 000 g/mol, de manière à conférer au TPE à blocs polyéther et TPNS de bonnes propriétés élastomériques et une tenue mécanique suffisante et compatible avec l'utilisation dans l'article en caoutchouc selon l'invention.

Le bloc thermoplastique peut également être constitué de plusieurs blocs thermoplastiques tels que définis ci-dessus.

### II-2.4 Exemples de TPE à blocs polyéther et TPNS

A titre d'exemples d'élastomères TPE à blocs polyéther et TPNS commercialement disponibles, on peut citer les élastomères PEBA de type « PEBAX », commercialisés par la société Arkema, par exemple sous la dénomination « PEBAX 4033 », « PEBAX 6333 » ou encore les « VESTAMID E » commercialisés par EVONIK, par exemple sous la dénomination « VESTAMID E55 » ou « VESTAMID E62 ».

### II-2.5 Quantité de TPE à blocs polyéther et TPNS

Dans la composition de l'article en caoutchouc selon l'invention, le taux de l'élastomère TPE (c'est à dire le ou les élastomères TPE) à blocs polyéther et TPNS est de préférence compris dans un domaine allant de 1 à 40 pce, de préférence de 7 à 30 pce, de préférence de 11 à 25 pce.

### II-3 Charge renforçante

Selon l'invention, la composition de l'article en caoutchouc est à base d'une charge comprenant de 10 à 60 pce de noir de carbone et de 5 à 30 pce de silice, le noir de carbone représentant de 55% à 95% en poids par rapport au poids total de noir de carbone et de silice.

Les noirs utilisables dans le cadre de la présente invention peuvent être tout noir conventionnellement utilisé dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600). Des mélanges de plusieurs noirs de carbone peuvent également être utilisés dans les taux prescrits.

Comme exemples de charges organiques autres que des noirs de carbone, on peut citer les charges organiques de polyvinyle fonctionnalisé telles que décrites dans les demandes WO 2006/069792, WO 2006/069793, WO 2008/003434 et WO 2008/003435.

Avantageusement, la surface spécifique BET du noir de carbone est d'au moins 90 m²/g, de préférence entre 100 et 150 m²/g. La surface spécifique BET des noirs de carbone est mesurée selon la norme ASTM D6556-10 [méthode multipoints (au minimum 5 points) - gaz : azote - domaine de pression relative P/P0 : 0.1 à 0.31].

Le noir de carbone présente avantageusement un indice d'absorption d'huile COAN supérieur ou égal à 90 mL/100g. Le COAN, ou indice d'absorption d'huile par des d'échantillons comprimés (« Compressed Oil Absorption Number » en anglais), des noirs de carbone, est mesuré selon la norme ASTM D3493-16.

Avantageusement, le taux de noir de carbone (qu'il y en ait un ou plusieurs) dans la composition selon l'invention est compris dans un domaine allant de 15 à 55 pce, de préférence de 30 à 50 pce.

Les silices utilisables dans le cadre de la présente invention peuvent être toute silice connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Il peut également s'agir d'un mélange de plusieurs silices, dès lors qu'elles sont utilisées dans les taux prescrits.

La surface spécifique BET de la silice est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Les valeurs de surface spécifique CTAB de la silice ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

Les silices utilisables dans le cadre de la présente invention présentent avantageusement une surface spécifique BET inférieure à 250 m²/g et/ou une surface spécifique CTAB inférieure à 220 m²/g, de préférence une surface spécifique BET comprise dans un domaine allant de 125 à 200 m²/g et/ou une surface spécifique CTAB comprise dans un domaine allant de 140 à 170 m²/g.

A titre de silices utilisables dans le cadre de la présente invention, on citera par exemple les silices précipitées hautement dispersibles (dites "HDS") « Ultrasil 7000 » et « Ultrasil 7005 » de la société Evonik, les silices « Zeosil 1165MP, 1135MP et 1115MP » de la société Rhodia, la silice « Hi-Sil EZ150G » de la société PPG, les silices « Zeopol 8715, 8745 et 8755 » de la Société Huber, les silices à haute surface spécifique telles que décrites dans la demande WO 03/016387.

Avantageusement, le taux de silice (qu'il y en ait une ou plusieurs) dans la composition selon l'invention est compris dans un domaine allant de 5 à 25 pce, de préférence de 6 à 20 pce.

Pour coupler la silice renforçante à l'élastomère diénique, on peut utiliser de manière bien connue un agent de couplage (ou agent de liaison) au moins bifonctionnel destiné à assurer une connexion suffisante, de nature chimique et/ou physique, entre la silice (surface de ses particules) et l'élastomère diénique (ci-après simplement dénommé « agent de couplage »). On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

L'homme du métier peut trouver des exemples d'agent de couplage dans les documents suivants : WO 02/083782, WO 02/30939, WO 02/31041, WO 2007/061550, WO 2006/125532, WO 2006/125533, WO 2006/125534, US 6,849,754, WO 99/09036, WO 2006/023815, WO 2007/098080, WO 2010/072685 et WO 2008/055986.

Toutefois, il est avantageux dans le cadre de la présente invention de ne pas utiliser d'agent de couplage. Ainsi, préférentiellement, la teneur en agent de couplage, dans la composition selon l'invention, est avantageusement inférieure à 6% en poids par rapport au poids de silice, de préférence inférieure à 2%, de préférence inférieure à 1% en poids par rapport au poids de silice. De préférence encore, la composition selon l'invention ne comprend pas d'agent de couplage.

Par ailleurs, lorsque la composition selon l'invention comprend de la silice, la composition comprend avantageusement un agent de recouvrement de la silice. Parmi les agents de recouvrement de la silice, on peut citer par exemple des hydroxysilanes ou des silanes hydrolysables tels que des hydroxysilanes (voir par exemple WO 2009/062733), des alkylalkoxysilanes, notamment des alkyltriéthoxysilanes comme par exemple le 1-octyl-tri-éthoxysilane, des polyols (par exemple diols ou triols), des polyéthers (par exemple des polyéthylène-glycols), des aminés primaires, secondaires ou tertiaires (par exemple des trialcanol-amines), une guanidine éventuellement substituée, notamment la diphénylguanidine, des polyorgano-siloxanes hydroxylés ou hydrolysables (par exemple des α,ω -dihydroxy-poly-organosilanes (notamment des α,ω-dihydroxy-polydiméthylsiloxanes) (voir par exemple EP 0 784 072), des acides gras comme par exemple l'acide stéarique. Lorsqu'un agent de recouvrement de la silice est utilisé, il est utilisé à un taux compris entre 0 et 5 pce. De préférence, l'agent de recouvrement de la silice est un polyéthylène glycol. Le taux d'agent de recouvrement de la silice, de préférence de polyéthylène glycol, dans la composition selon l'invention est avantageusement compris dans un domaine allant de 1 à 6 pce, de préférence de 1,5 à 4 pce.

De manière avantageuse, le taux total de noir de carbone et de silice dans la composition selon l'invention est compris dans un domaine allant de 15 à 90 pce, de préférence de 20 à 70 pce.

Avantageusement, le noir de carbone représente de 60% à 90% en poids, de préférence de 65% à 80% en poids, par rapport au poids total de noir de carbone et de silice.

### II-4 Système de réticulation

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire et/ou d'agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tel que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### II-5 Additifs possibles

Les compositions des articles en caoutchouc selon l'invention peuvent comporter optionnellement également tout ou partie des additifs usuels habituellement utilisés dans les compositions d'élastomères pour pneumatique, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269).

### II-6 Procédé de fabrication

Les compositions des articles en caoutchouc peuvent être fabriquées dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type « Banbury »), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui peut être réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

Avantageusement, la composition de l'article en caoutchouc selon l'invention peut être préparé selon un procédé comprenant les étapes suivantes :
a) mettre en contact et mélanger, de manière concomitante ou successive, en une ou plusieurs fois, au moins 55% en poids de l'au moins un élastomère isoprénique présentant un taux molaire de liaison 1,4-cis d'au moins 90%, de l'élastomère thermoplastique comprenant au moins un bloc élastomère polyéther et au moins un bloc thermoplastique non styrénique présentant une Tf comprise dans un domaine allant de 130°C à 175°C, des 10 à 60 pce du noir de carbone et des 5 à 30 pce de la silice, le noir de carbone représentant de 55% à 95% en poids par rapport au poids total de noir de carbone et de silice, en malaxant thermo-mécaniquement le tout jusqu'à atteindre une température maximale T1 supérieure ou égale à la température de fusion de l'élastomère thermoplastique comprenant au moins un bloc élastomère polyéther et au moins un bloc thermoplastique non styrénique,
b) diminuer la température du mélange obtenu à l'étape (a) jusqu'à une température maximale T2 inférieure à la température de fusion de l'élastomère thermoplastique comprenant au moins un bloc élastomère polyéther et au moins un bloc thermoplastique non styrénique, puis incorporer dans le mélange un système de réticulation et mélanger le tout.

Ce procédé peut être réalisé en utilisant deux phases de préparation successives selon une procédure générale bien connue de l'homme du métier : l'étape (a) constitue alors une première phase de travail ou malaxage thermo-mécanique (parfois qualifiée de phase « non-productive ») à haute température, jusqu'à une température maximale comprise entre 130°C et 200°C, de préférence entre 150°C et 180°C, suivie d'une seconde phase de travail mécanique (parfois qualifiée de phase « productive ») (l'étape (b) du procédé) à plus basse température, typiquement inférieure à 110°C, par exemple entre 60°C et 100°C, phase de finition au cours de laquelle est incorporé le système de réticulation. De telles phases ont été décrites par exemple dans les demandes EP 0 501 227 A, EP 0 735 088 A, EP 0 810 258 A, WO 2000/05300 ou WO 2000/05301.

L'étape (a) peut être conduite préférentiellement durant préférentiellement de 30 secondes à quelques minutes. La durée totale de cette phase non-productive, est de préférence comprise entre 2 et 10 minutes à une température.

Selon l'invention, la température maximale T1 est de préférence d'au moins 1°C, de préférence 5°C, supérieure à la température de fusion de l'élastomère thermoplastique comprenant au moins un bloc élastomère polyéther et au moins un bloc thermoplastique non styrénique. De préférence, la température maximale T1 est de 1°C à 20°C, de préférence de 5°C à 20°C supérieure à la température de fusion de l'élastomère thermoplastique comprenant au moins un bloc élastomère polyéther et au moins un bloc thermoplastique non styrénique. De préférence également, la température T1 est maintenue au moins 1 minutes, de préférence au moins 2 minutes, par exemple entre 1 et 10 minutes, de préférence entre 2 et 6 minutes.

La Demanderesse a constaté qu'augmente la température maximale T1 au-delà de la température de fusion de l'élastomère thermoplastique comprenant au moins un bloc élastomère polyéther et au moins un bloc thermoplastique non styrénique permet d'améliorer davantage le compromis de performances que sont la résistance aux agressions mécanique et l'hystérèse.

L'élastomère thermoplastique comprenant au moins un bloc élastomère polyéther et au moins un bloc thermoplastique non styrénique (dont la température de fusion est comprise dans un domaine allant de 130°C à 175°C) peut être introduit à l'état solide, tel que vendu commercialement, ou à l'état liquide. Lorsque le l'élastomère thermoplastique comprenant au moins un bloc élastomère polyéther et au moins un bloc thermoplastique non styrénique est introduit sous forme liquide, il est alors nécessaire de réaliser une étape complémentaire de chauffage de l'élastomère thermoplastique comprenant au moins un bloc élastomère polyéther et au moins un bloc thermoplastique non styrénique à une température supérieure à sa température de fusion, avant d'être mis en contact avec les autres constituants de l'étape (a). Toutefois, il est préférable d'introduire l'élastomère thermoplastique comprenant au moins un bloc élastomère polyéther et au moins un bloc thermoplastique non styrénique à l'état solide.

Lors de l'étape (b), après refroidissement du mélange obtenu à l'étape (a), on incorpore alors le système de réticulation, de préférence le système de vulcanisation, à une température inférieure à la température de fusion de l'élastomère thermoplastique comprenant au moins un bloc élastomère polyéther et au moins un bloc thermoplastique non styrénique, généralement dans un mélangeur externe tel qu'un mélangeur à cylindres ; le tout est alors mélangé (phase productive) pendant quelques minutes, par exemple entre 5 et 15 min.

Avantageusement, la température maximale T2 est de préférence inférieure à 120°C, de préférence inférieure à 100°C, de préférence encore inférieure à 90°C. De préférence, la température maximale T2 est comprise dans un domaine allant de 20°C à 90°C.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des produits tels qu'une bande de roulement de pneumatique. Ces produits peuvent ensuite être utilisés pour la fabrication de pneumatiques, selon les techniques connues de l'homme du métier.

La réticulation (ou cuisson) pour réaliser l'article en caoutchouc est conduite de manière connue à une température généralement comprise entre 120°C et 200°C, sous pression, pendant un temps suffisant qui peut varier par exemple entre 5 et 300 min en fonction notamment de la température de cuisson, du système de réticulation adopté, de la cinétique de réticulation de la composition considérée.

### II-7 Articles en caoutchouc

Selon l'invention, l'article en caoutchouc est choisi dans le groupe constitué par les pneumatiques pour véhicule de génie civil (de préférence les pneumatiques de véhicules de génie civil), les chenilles et les bandes transporteuses. bandes transporteuses. La présente invention a donc pour objet des pneumatiques pour (de préférence de) véhicule de génie civil, des chenilles et des bandes transporteuses comprenant une composition de l'article en caoutchouc selon l'invention ou une composition susceptible d'être obtenue par le procédé de fabrication de l'article en caoutchouc selon l'invention, telles que décrites précédemment.

Un objet particulièrement préféré de l'invention est un pneumatique pour (de préférence de) véhicule de génie civil, dont la bande de roulement comprend une composition à base d'au moins :
- une matrice élastomère comprenant au moins 55% en poids d'au moins un élastomère isoprénique présentant un taux molaire de liaison 1,4-cis d'au moins 90%, de préférence au moins 55% en poids de caoutchouc naturel,
- un élastomère thermoplastique comprenant au moins un bloc élastomère polyéther et au moins un bloc thermoplastique non styrénique, l'élastomère thermoplastique présentant une température de fusion, Tf, comprise dans un domaine allant de 130°C à 175°C, de préférence de 140°C à 170°C,
- 10 à 60 pce de noir de carbone,
- 5 à 30 pce de silice, et
- un système de réticulation,

le noir de carbone représentant de 55% à 95% en poids par rapport au poids total de noir de carbone et de silice,
la composition étant préparée selon un procédé comprenant les étapes suivantes :
   a) mettre en contact et mélanger, de manière concomitante ou successive, en une ou plusieurs fois, au moins 55% en poids de l'au moins un élastomère isoprénique présentant un taux molaire de liaison 1,4-cis d'au moins 90%, de l'élastomère thermoplastique comprenant au moins un bloc élastomère polyéther et au moins un bloc thermoplastique non styrénique présentant une Tf comprise dans un domaine allant de 130°C à 175°C, des 10 à 60 pce du noir de carbone et des 5 à 30 pce de la silice, le noir de carbone représentant de 55% à 95% en poids par rapport au poids total de noir de carbone et de silice, en malaxant thermo-mécaniquement le tout jusqu'à atteindre une température maximale T1 supérieure ou égale (de préférence supérieure de 5°C à 20°C) à la température de fusion de l'élastomère thermoplastique comprenant au moins un bloc élastomère polyéther et au moins un bloc thermoplastique non styrénique,
   b) diminuer la température du mélange obtenu à l'étape (a) jusqu'à une température maximale T2 inférieure à la température de fusion de l'élastomère thermoplastique comprenant au moins un bloc élastomère polyéther et au moins un bloc thermoplastique non styrénique (de préférence à une température comprise dans un domaine allant de 20°C à 90°C), puis incorporer dans le mélange un système de réticulation et mélanger le tout.

Concernant les pneumatiques pour véhicules de génie civil, il peut être noté que la bande de roulement présente une surface de roulement pourvue d'une sculpture formée par une pluralité de rainures délimitant des éléments en relief (blocs, nervures) de façon à générer des arêtes de matière ainsi que des creux. Ces rainures représentent un volume de creux qui, rapporté au volume total de la bande de roulement (incluant à la fois le volume d'éléments en relief et celui de toutes les rainures) s'exprime par un pourcentage désigné dans la présente par "taux de creux volumique". Un taux de creux volumique égal à zéro indique une bande de roulement sans rainure ni creux.

Les pneumatiques pour véhicules de génie civil sont pourvus de bandes de roulement qui présentent, par rapport aux épaisseurs des bandes de roulement des pneumatiques pour véhicules légers, en particulier pour véhicules tourisme ou camionnette, de grandes épaisseurs de matériau caoutchoutique. Typiquement la partie usante de la bande de roulement d'un pneumatiques pour poids lourd présente une épaisseur d'au moins 15 mm, celle d'un véhicule génie civil d'au moins 30 mm, voire jusqu'à 120 mm. Ainsi, la bande de roulement du pneumatique selon l'invention présente avantageusement une ou plusieurs rainures dont la profondeur moyenne va de 15 à 120 mm, de préférence 65 à 120 mm.

Les pneumatiques pour véhicules de génie civil selon l'invention peuvent avoir un diamètre allant de 20 à 63 pouces, de préférence de 35 à 63 pouces.

Par ailleurs, le taux moyen de creux volumique sur l'ensemble de la bande de roulement du pneumatique pour véhicules de génie civil selon l'invention peut être compris dans un domaine allant de 5 à 40 %, de préférence de 5 à 25 %.

Les chenilles selon l'invention sont des chenilles en caoutchouc comprenant au moins un élément en caoutchouc, l'au moins un élément en caoutchouc étant de préférence une courroie sans fin en caoutchouc ou une pluralité de patins en caoutchouc.

### III- EXEMPLES

### III-1 Mesures et tests utilisés

### Propriétés dynamiques

Les propriétés dynamiques G* et Max tan(δ) sont mesurées sur un viscoanalyseur (Metravib VA4000), selon la norme ASTM D5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10Hz, à 100°C selon la norme ASTM D 1349-09. On effectue un balayage en amplitude de déformation de 0,1% à 50% (cycle aller), puis de 50% à 0,1% (cycle retour). Sur le cycle retour, on enregistre la valeur du facteur de perte, noté tan(δ)ₘₐₓ.

Les résultats de performance hystérétique (tan(δ)max à 100°C) sont exprimés en pourcentage base 100 par rapport à la composition témoin T1. Un résultat supérieur à 100 indique une amélioration de la performance hystérétique, soit une diminution de l'hystérèse.

### Test chenille

Ce test est représentatif de la résistance aux agressions. Il consiste à faire rouler une chenille métallique montée sur un bandage pneumatique monté sur roue et véhicule, et gonflé, sur laquelle sont fixés des patins en caoutchouc de composition donnée, sur une piste remplie de cailloux pendant un certain temps. A la fin du roulage on démonte les patins et on compte le nombre de coupures visibles à l'œil nu en surface. Plus le nombre est faible, meilleure est la performance de résistance aux agressions.

Pour réaliser ce test, on a fabriqué des patins de différentes compositions (voir Tableau 1 ci-dessous) selon le procédé décrit au point V-1 ci-dessus. Pour obtenir un patin, on a calandré la composition non-réticulée obtenue au point V-1 à une épaisseur de 5,5 mm, découpé des plaques (2 de 260x120 mm, 2 de 250x100 mm et 2 de 235x90 mm) que l'on a ensuite empilées de manière pyramidale. Ce bloc de 6 plaques a ensuite été inséré dans un moule de forme pyramidale à base rectangulaire de 260x120 mm et à sommet plat de 235x90 mm de surface, et cuit à une température de 120°C pendant 300 minutes à une pression de 180 bars, permettant ainsi la réticulation de la composition.

Les patins ont ensuite été montés sur deux chenilles métalliques X-TRACK10 de la société Caterpillar, qui ont elles-mêmes été montées sur deux pneumatiques MICHELIN XMINE D2 12.00R24 du train arrière d'un camion SCANIA R410. Les pneumatiques ont été retaillés pour supporter les chenilles. Les pneumatiques étaient gonflés à une pression de 7 bars et portaient une charge de 4 250 kg par pneumatique.

Le camion a roulé sur une piste sans pente recouverte de cailloux porphyre de taille 30/60 obtenus auprès de SONVOLES Murcia, Espagne, pendant 5 heures à une vitesse de 5 km/h. La densité de cailloux sur la piste était d'environ 1000 à 1500 cailloux au mètre carré.

A la fin du test, les coupures visibles à la surface des patins ont été comptées. Le résultat a été moyenné sur la base de 6 patins. Les résultats de performance aux agressions sont exprimés en pourcentage base 100 par rapport à la composition témoin T1. Un résultat supérieur à 100 indique une amélioration de la résistance aux agressions.

### Compromis résistance aux agressions mécaniques / hystérèse

Le compromis de performances entre la résistance aux agressions mécaniques et l'hystérèse peut être considéré comme étant la moyenne arithmétique des pourcentage base 100 de ces deux performances.

### III-2 Préparation des compositions

Dans les exemples qui suivent, les compositions caoutchouteuses ont été réalisées comme décrit au point II-6 ci-dessus. En particulier, la phase « non-productive » a été réalisée dans un mélangeur de 0,4 litres pendant 8 minutes, pour une vitesse moyenne de palettes de 50 tours par minute jusqu'à atteindre une température maximale de tombée de 165°C. La phase « productive » a été réalisée dans un outil à cylindre à 23°C pendant 5 minutes.

La réticulation de la composition a été conduite à une température comprise entre 130°C et 200°C, sous pression.

### III-3 Essais de compositions de caoutchouc

Les exemples présentés ci-dessous ont pour objet de comparer les performances de résistance aux agressions mécaniques et d'hystérèse de quatre compositions conformes à la présente invention (C1 à C4) avec deux compositions témoin (T1 et T2).

La composition témoin T1 est une composition usuellement utilisée dans les pneumatiques de véhicules de génie civil pour sa bonne résistance à l'usure et pour sa bonne performance hystérétique. La composition témoin T2 est une composition usuellement utilisée dans les pneumatiques de véhicules de génie civil pour sa bonne résistance aux agressions mécaniques, au détriment de l'hystérèse.

Le Tableau 1 présente les compositions testées (en pce), ainsi que les résultats obtenus.

Les compositions C1 à C4 diffèrent de la composition témoin T1 par la présence d'un élastomère thermoplastique conforme à l'invention. Il peut être noté que le taux de charge a été adapté de manière à ce que la fraction volumique de charge dans la composition soit constante par rapport au témoin T1. De même, le taux de PEG a été adapté en fonction du taux de silice, et le taux de l'élastomère thermoplastique a été adapté de manière à ce que sa fraction volumique dans la composition soit constante (le PEBAX 7033 présentant une densité plus élevée que les autres PEBAX utilisés, sa quantité a été réduite en conséquent).

**[Tableau 1]**

| | T1 | T2 | C1 | C2 | C3 | C4 |
|---|---|---|---|---|---|---|
| NR⁽¹⁾ | 100 | - | 100 | 100 | 100 | 100 |
| SBR⁽²⁾ | - | 100 | - | - | - | - |
| N115⁽³⁾ | 40 | - | 46 | 46 | 46 | 46 |
| N375⁽³⁾ | - | 62 | - | - | - | - |
| Silice⁽⁴⁾ | 15.3 | - | 17.5 | 17.5 | 17.5 | 17.5 |
| PEG⁽⁵⁾ | 2.5 | - | 2.9 | 2.9 | 2.9 | 2.9 |
| %vol charge | 20% | 22% | 20% | 20% | 20% | 20% vo |
| TPE 1⁽⁶⁾ | - | - | 17.5 | - | - | - |
| TPE2⁽⁷⁾ | - | - | - | 17.5 | - | - |
| TPE 3⁽⁸⁾ | - | - | - | - | 17.5 | - |
| TPE 4⁽⁹⁾ | - | - | - | - | - | 17.2 |
| %vol TPE | - | - | 10% | 10% | 10% | 10% |
| Plastifiant liquide⁽¹⁰⁾ | - | 6 | - | - | - | - |
| Résine⁽¹ | - | 5 | - | - | - | - |
| Antioxydant⁽¹²⁾ | 1.5 | 1 | 1.5 | 1.5 | 1.5 | 1.5 |
| Cire anti-ozone⁽¹³⁾ | 1 | - | 1 | 1 | 1 | 1 |
| TMQ⁽¹⁴⁾ | 1 | - | 1 | 1 | 1 | 1 |
| Acide stéarique | 1 | - | 1 | 1 | 1 | 1 |
| ZnO⁽¹⁵⁾ | 2.7 | - | 2.7 | 2.7 | 2.7 | 2.7 |
| Accélérateur⁽¹⁶⁾ | 1.1 | 1.1 | 1.1 | 1.1 | 1.1 | 1.1 |
| Soufre | 1.7 | 1.3 | 1.7 | 1.7 | 1.7 | 1.7 |
| | | | | | | |
| Tan(d)max à 100°C | 100 | 48 | 76 | 72 | 72 | 65 |
| Test chenille | 100 | 118 | 105 | 174 | 118 | 132 |
| Moyenne des performances | 100 | 83 | 90,5 | 123 | 95 | 98,5 |

| | | | | | | |
|---|---|---|---|---|---|---|
| (1) Caoutchouc naturel (2) SBR solution avec 5 % de motifs polybutadiène 1,2 - 29 % de motifs styrène - Tg = -52° (3) Noir de carbone de grade N115 ou N375 selon la norme ASTM D-1765 (4) Silice « ULTRASIL VN3 » de la société Evonik (5) polyéthylène glycol « CARBOWAX8000 » (6) Elastomère thermoplastique TPE 1 « PEBAX 2533 SA 01 » de la société Arkema (Tf = 134°C) (7) Elastomère thermoplastique TPE 2 « PEBAX 5533 SA 01 » de la société Arkema (Tf = 159°C) (8) Elastomère thermoplastique TPE 3 « PEBAX 55R53 SP 01 » de la société Arkema (Tf = 167°C) (9) Elastomère thermoplastique TPE 4 « PEBAX 7033 SA 01 » de la société Arkema (Tf = 172°C) (10) Huile TDAE « Vivatec 500 » de la société Klaus Dahleke (11) Résine tackifiante « Escorez 1102 » de société EXXON (Mn 1370 g/mol ; Ip= 2,3) (12) N-1,3-diméthylbutyl-N-phénylparaphénylènediamine « Santoflex 6-PPD » de la société Flexsys (13) Cire anti-ozone « VARAZON 4959 » de la société Sasol Wax (14) 2,2,4-triméthyl-1,2-dihydroquinoline « Pilnox TMQ » de la société Nocil (15) Oxyde de zinc de grade industriel de la société Umicore (16) N-cyclohexyl-2-benzothiazyle sulfénamide « Santocure CBS » de la société Flexsys | | | | | | |

Les résultats présentés dans le Tableau 1 ci-dessus montrent que les compositions conformes à l'invention permettent d'améliorer la résistance aux agressions mécaniques par rapport à la composition témoin T1, et même par rapport à la composition témoin T2 qui est une composition témoin de référence vis-à-vis de cette propriété lorsque la température de fusion de l'élastomère thermoplastique conforme à l'invention est supérieure à 140°C. Par ailleurs, la performance d'hystérèse des compositions conformes à l'invention est fortement améliorée par rapport au témoin T2. Ainsi, les composition conformes à l'invention présentent une amélioration de la résistance aux agressions mécaniques, sans trop pénaliser le compromis de performances que sont la résistance aux agressions mécanique et l'hystérèse, voire en améliorant. Ces composition trouvent des application dans les pneumatiques pour véhicules de génie civil, les chenilles en caoutchouc et les bandes transporteuse.

## Revendications

1. Article en caoutchouc comprenant une composition à base d'au moins :
- une matrice élastomère comprenant au moins 55% en poids d'au moins un élastomère isoprénique présentant un taux molaire de liaison 1,4-cis d'au moins 90%,
- un élastomère thermoplastique comprenant au moins un bloc élastomère polyéther et au moins un bloc thermoplastique non styrénique, l'élastomère thermoplastique présentant une température de fusion, Tf, comprise dans un domaine allant de 130°C à 175°C,
- 10 à 60 pce de noir de carbone,
- 5 à 30 pce de silice, et
- un système de réticulation,
le noir de carbone représentant de 55% à 95% en poids par rapport au poids total de noir de carbone et de silice,
l'article en caoutchouc étant choisi dans le groupe constitué par les pneumatiques pour véhicule de génie civil, les chenilles et les bandes transporteuses.

2. Article en caoutchouc selon la revendication 1, dans lequel l'élastomère isoprénique présentant un taux molaire de liaison 1,4-cis d'au moins 90% est choisi dans le groupe constitué par le caoutchouc naturel, les polyisoprènes de synthèse et leurs mélanges, de préférence l'élastomère isoprénique présentant un taux molaire de liaison 1,4-cis d'au moins 90% est du caoutchouc naturel.

3. Article en caoutchouc selon l'une quelconque des revendications précédentes, dans lequel l'élastomère isoprénique représente au moins 75% en poids, de préférence au moins 85% en poids, de préférence 100% en poids, de la matrice élastomère de la composition.

4. Article en caoutchouc selon l'une quelconque des revendications précédentes, dans lequel le ou les blocs thermoplastiques non styréniques de l'élastomère thermoplastique sont choisis dans le groupe constitué par les polyamides.

5. Article en caoutchouc selon l'une quelconque des revendications précédentes, dans lequel la fraction volumique de bloc thermoplastique non styrénique dans l'élastomère thermoplastique est comprise dans un domaine allant de 5% à 99%, de préférence de 8% à 90%.

6. Article en caoutchouc selon l'une quelconque des revendications précédentes, dans lequel le ou les blocs élastomères polyéthers de l'élastomère thermoplastique sont choisis dans le groupe constitué par les polytétraméthylènes glycol (PTMG), les polyéthylènes glycols (PEG), le polypropylène éther glycol (PPG), le polyhexaméthylène éther glycol, le polytriméthylenether glycol (PO3G), le poly(3-alkyltétrahydrofurane), et leurs mélanges, de préférence dans le groupe constitué par les polytétraméthylènes glycol (PTMG), les polyéthylènes glycols (PEG) et leurs mélanges.

7. Article en caoutchouc selon l'une quelconque des revendications précédentes, dans lequel l'élastomère thermoplastique est choisi dans le groupe constitué par les copolymères à blocs polyéthers et polyamides (PEBA).

8. Article en caoutchouc selon l'une quelconque des revendications précédentes, dans lequel l'élastomère thermoplastique présente une Tf comprise dans un domaine allant de 140°C à 170°C, de préférence de 150°C à 169°C.

9. Article en caoutchouc selon l'une quelconque des revendications précédentes, dans lequel le taux de l'élastomère thermoplastique dans la composition est compris dans un domaine allant de 1 à 40 pce, de préférence de 11 à 25 pce.

10. Article en caoutchouc selon l'une quelconque des revendications précédentes, dans lequel le taux total de noir de carbone et de silice dans la composition est compris dans un domaine allant de 15 à 90 pce, de préférence de 20 à 70 pce.

11. Article en caoutchouc selon l'une quelconque des revendications précédentes, dans lequel le taux de noir de carbone dans la composition est compris dans un domaine allant de 15 à 55 pce, de préférence de 30 à 50 pce, et le taux de silice dans la composition est compris dans un domaine allant de 5 à 25 pce, de préférence de 6 à 20 pce.

12. Article en caoutchouc selon l'une quelconque des revendications précédentes, dans lequel le noir de carbone représente de 60% à 90% en poids, de préférence de 65% à 80% en poids, par rapport au poids total de noir de carbone et de silice.

13. Article en caoutchouc selon l'une quelconque des revendications précédentes, dans lequel la composition ne comprend pas d'agent de couplage ou en comprend moins de 6% en poids par rapport au poids de silice, de préférence moins de 2% en poids par rapport au poids de silice.

14. Article en caoutchouc selon l'une quelconque des revendications précédentes, dans lequel la composition est préparée selon un procédé comprenant les étapes suivantes :
a) mettre en contact et mélanger, de manière concomitante ou successive, en une ou plusieurs fois, au moins l'au moins 55% en poids d'au moins un élastomère isoprénique présentant un taux molaire de liaison 1,4-cis d'au moins 90%, l'élastomère thermoplastique comprenant au moins un bloc élastomère polyéther et au moins un bloc thermoplastique non styrénique présentant une Tf comprise dans un domaine allant de 130°C à 175°C, les 10 à 60 pce du noir de carbone et les 5 à 30 pce de la silice, le noir de carbone représentant de 55% à 95% en poids par rapport au poids total de noir de carbone et de silice, en malaxant thermo-mécaniquement le tout jusqu'à atteindre une température maximale T1 supérieure ou égale à la température de fusion de l'élastomère thermoplastique comprenant au moins un bloc élastomère polyéther et au moins un bloc thermoplastique non styrénique,
b) diminuer la température du mélange obtenu à l'étape (a) jusqu'à une température maximale T2 inférieure à la température de fusion de l'élastomère thermoplastique comprenant au moins un bloc élastomère polyéther et au moins un bloc thermoplastique non styrénique, puis incorporer dans le mélange un système de réticulation et mélanger le tout.

15. Article en caoutchouc selon la revendication 14, dans lequel la température T1 est d'au moins 1°C supérieure, de préférence de 5°C à 20°C, à la température de l'élastomère thermoplastique comprenant au moins un bloc élastomère polyéther et au moins un bloc thermoplastique non styrénique, et la température T2 est inférieure à 100°C, de préférence comprise dans un domaine allant de 20°C à 90°C.

## Patentansprüche

1. Kautschukgegenstand, umfassend eine Zusammensetzung auf Basis von mindestens:
- einer Elastomermatrix, umfassend mindestens 55 Gew.-% mindestens eines Isopren-Elastomers mit einem molaren Gehalt an 1,4-cis-Bindungen von mindestens 90%,
- einem thermoplastischen Elastomer, das mindestens einen Polyetherelastomerblock und mindestens einen thermoplastischen Nicht-Styrol-Block umfasst, wobei das thermoplastische Elastomer eine Schmelztemperatur Tf im Bereich von 130 °C bis 175 °C aufweist,
- 10 bis 60 phe Ruß,
- 5 bis 30 phe Kieselsäure und
- einem Vernetzungssystem,
wobei der Ruß 55 bis 95 Gew.-%, bezogen auf das Gesamtgewicht von Ruß und Kieselsäure, ausmacht,
wobei der Kautschukgegenstand aus der Gruppe bestehend aus Reifen für Tiefbaufahrzeuge, Ketten und Transportbändern ausgewählt ist.

2. Kautschukgegenstand nach Anspruch 1, wobei das Isopren-Elastomer mit einem molaren Gehalt an 1,4-cis-Bindungen von mindestens 90 % aus der Gruppe bestehend aus Naturkautschuk, synthetischen Polyisoprenen und Mischungen davon ausgewählt ist und das Isopren-Elastomer mit einem molaren Gehalt an 1,4-cis-Bindungen von mindestens 90 % vorzugsweise Naturkautschuk ist.

3. Kautschukgegenstand nach einem der vorhergehenden Ansprüche, wobei das Isopren-Elastomer mindestens 75 Gew.-%, vorzugsweise mindestens 85 Gew.-%, vorzugsweise 100 Gew.-%, der Elastomermatrix der Zusammensetzung ausmacht.

4. Kautschukgegenstand nach einem der vorhergehenden Ansprüche, wobei der oder die thermoplastischen Nicht-Styrol-Blöcke des thermoplastischen Elastomers aus der Gruppe bestehend aus Polyamiden ausgewählt sind.

5. Kautschukgegenstand nach einem der vorhergehenden Ansprüche, wobei der Volumenanteil des thermoplastischen Nicht-Styrol-Blocks in dem thermoplastischen Elastomer in einem Bereich von 5 % bis 99 %, vorzugsweise von 8 % bis 90 %, liegt.

6. Kautschukgegenstand nach einem der vorhergehenden Ansprüche, wobei der oder die Polyetherelastomerblöcke des thermoplastischen Elastomers aus der Gruppe bestehend aus Polytetramethylenglykol (PTMG), Polyethylenglykolen (PEG), Polypropylenetherglykol (PPG), Polyhexamethylenetherglykol, Polytrimethylenetherglykol (PO3G), Poly(3-alkyltetrahydrofuran) und Mischungen davon und vorzugsweise aus der Gruppe bestehend aus Polytetramethylenglykol (PTMG), Polyethylenglykolen (PEG) und Mischungen davon ausgewählt ist.

7. Kautschukgegenstand nach einem der vorhergehenden Ansprüche, wobei das thermoplastische Elastomer aus der Gruppe bestehend aus Copolymeren mit Polyether- und Polyamidblöcken (PEBA) ausgewählt ist.

8. Kautschukgegenstand nach einem der vorhergehenden Ansprüche, wobei das thermoplastische Elastomer eine Tf in einem Bereich von 140 °C bis 170 °C, vorzugsweise von 150 °C bis 169 °C, aufweist.

9. Kautschukgegenstand nach einem der vorhergehenden Ansprüche, wobei der Gehalt des thermoplastischen Elastomers in der Zusammensetzung in einem Bereich von 1 bis 40 phe, vorzugsweise von 11 bis 25 phe, liegt.

10. Kautschukgegenstand nach einem der vorhergehenden Ansprüche, wobei der Gesamtgehalt an Ruß und Kieselsäure in der Zusammensetzung in einem Bereich von 15 bis 90 phe, vorzugsweise von 20 bis 70 phe, liegt.

11. Kautschukgegenstand nach einem der vorhergehenden Ansprüche, wobei der Gehalt an Ruß in der Zusammensetzung in einem Bereich von 15 bis 55 phe, vorzugsweise von 30 bis 50 phe, liegt und der Gehalt an Kieselsäure in der Zusammensetzung in einem Bereich von 5 bis 25 phe, vorzugsweise von 6 bis 20 phe liegt.

12. Kautschukgegenstand nach einem der vorhergehenden Ansprüche, wobei der Ruß 60 Gew.-% bis 90 Gew.-%, vorzugsweise 65 Gew.-% bis 80 Gew.-%, bezogen auf das Gesamtgewicht von Ruß und Kieselsäure, ausmacht.

13. Kautschukgegenstand nach einem der vorhergehenden Ansprüche, wobei die Zusammensetzung kein Kupplungsmittel umfasst oder weniger als 6 Gew.-%, bezogen auf das Gewicht der Kieselsäure, vorzugsweise weniger als 2 Gew.-%, bezogen auf das Gewicht der Kieselsäure, umfasst.

14. Kautschukgegenstand nach einem der vorhergehenden Ansprüche, wobei die Zusammensetzung nach einem in Verfahren hergestellt wird, das folgende Schritte umfasst:
a) gleichzeitiges oder aufeinanderfolgendes ein- oder mehrmaliges Inkontaktbringen und Mischen von mindestens den mindestens 55 Gew.-% mindestens eines Isopren-Elastomers mit einem molaren Gehalt an 1,4-cis-Bindungen von mindestens 90 %, dem thermoplastischen Elastomer, das mindestens einen Polyetherelastomerblock und mindestens einen thermoplastischen Nicht-Styrol-Block umfasst, mit einer Schmelztemperatur Tf im Bereich von 130 °C bis 175 °C, 10 bis 60 phe Ruß und 5 bis 30 phe Kieselsäure, wobei der Ruß 55 bis 95 Gew.-%, bezogen auf das Gesamtgewicht von Ruß und Kieselsäure, ausmacht, thermomechanisches Kneten des Ganzen bis zum Erreichen einer Höchsttemperatur T1, die größer oder gleich der Schmelztemperatur des thermoplastischen Elastomers, das mindestens einen Polyetherelastomerblock und mindestens einen thermoplastischen Nicht-Styrol-Block umfasst, ist,
b) Verringern der Temperatur der in Schritt (a) erhaltenen Mischung auf eine Höchsttemperatur T2, die unter der Schmelztemperatur des thermoplastischen Elastomers, das mindestens einen Polyetherelastomerblock und mindestens einen thermoplastischen Nicht-Styrol-Block umfasst, liegt, dann Einarbeiten eines Vernetzungssystems in die Mischung und Mischen des Ganzen.

15. Kautschukgegenstand nach Anspruch 14, wobei die Temperatur T1 mindestens 1 °C, vorzugsweise 5 °C bis 20 °C, höher ist als die Temperatur des thermoplastischen Elastomers, das mindestens einen Polyetherelastomerblock und mindestens einen thermoplastischen Nicht-Styrol-Block umfasst, und die Temperatur T2 kleiner als 100 °C ist und vorzugsweise in einem Bereich von 20 °C bis 90 °C liegt.

## Claims

1. Rubber article comprising a composition based on at least:
- one elastomeric matrix comprising at least 55% by weight of at least one isoprene elastomer having a molar content of 1,4-cis bond of at least 90%,
- one thermoplastic elastomer comprising at least one polyether elastomer block and at least one non-styrene thermoplastic block, the thermoplastic elastomer having a melting temperature, Tm, within a range extending from 130°C to 175°C,
- 10 to 60 phr of carbon black,
- 5 to 30 phr of silica, and
- a crosslinking system,
the carbon black representing from 55% to 95% by weight, relative to the total weight of carbon black and silica,
the rubber article being selected from the group consisting of tyres for civil engineering vehicles, caterpillar tracks and conveyor belts.

2. Rubber article according to Claim 1, wherein the isoprene elastomer having a molar content of 1,4-cis bond of at least 90% is selected from the group consisting of natural rubber, synthetic polyisoprenes and mixtures thereof; preferably, the isoprene elastomer having a molar content of 1,4-cis bond of at least 90% is natural rubber.

3. Rubber article according to either one of the preceding claims, wherein the isoprene elastomer represents at least 75% by weight, preferably at least 85% by weight, preferably 100% by weight, of the elastomeric matrix of the composition.

4. Rubber article according to any one of the preceding claims, wherein the non-styrene thermoplastic block(s) of the thermoplastic elastomer are selected from the group consisting of polyamides.

5. Rubber article according to any one of the preceding claims, wherein the volume fraction of non-styrene thermoplastic block in the thermoplastic elastomer is within a range extending from 5% to 99%, preferably from 8% to 90%.

6. Rubber article according to any one of the preceding claims, wherein the polyether elastomer block(s) of the thermoplastic elastomer are selected from the group consisting of polytetramethylene glycol (PTMG), polyethylene glycols (PEG), polypropylene ether glycol (PPG), polyhexamethylene ether glycol, polytrimethylene ether glycol (PO3G), poly(3-alkyltetrahydrofuran), and mixtures thereof, preferably from the group consisting of polytetramethylene glycol (PTMG), polyethylene glycols (PEG) and mixtures thereof.

7. Rubber article according to any one of the preceding claims, wherein the thermoplastic elastomer is selected from the group consisting of copolymers containing polyether and polyamide blocks (PEBA).

8. Rubber article according to any one of the preceding claims, wherein the thermoplastic elastomer has a Tm within a range extending from 140°C to 170°C, preferably from 150°C to 169°C.

9. Rubber article according to any one of the preceding claims, wherein the content of the thermoplastic elastomer in the composition is within a range extending from 1 to 40 phr and preferably from 11 to 25 phr.

10. Rubber article according to any one of the preceding claims, wherein the total content of carbon black and silica in the composition is within a range extending from 15 to 90 phr, preferably from 20 to 70 phr.

11. Rubber article according to any one of the preceding claims, wherein the carbon black content in the composition is within a range extending from 15 to 55 phr, preferably from 30 to 50 phr, and the silica content in the composition is within a range extending from 5 to 25 phr, preferably from 6 to 20 phr.

12. Rubber article according to any one of the preceding claims, wherein the carbon black represents from 60% to 90% by weight, preferably from 65% to 80% by weight, relative to the total weight of carbon black and silica.

13. Rubber article according to any one of the preceding claims, wherein the composition does not comprise a coupling agent, or comprises less than 6% by weight thereof relative to the weight of silica, preferably less than 2% by weight thereof relative to the weight of silica.

14. Rubber article according to any one of the preceding claims, wherein the composition is prepared by a process comprising the following steps:
(a) bringing into contact and mixing, concomitantly or successively, in one or more batches, at least the at least 55% by weight of the at least one isoprene elastomer having a molar content of 1,4-cis bond of at least 90%, the thermoplastic elastomer comprising at least one polyether elastomer block and at least one non-styrene thermoplastic block having a Tm within a range extending from 130°C to 175°C, 10 to 60 phr of carbon black and 5 to 30 phr of silica, the carbon black representing from 55% to 95% by weight relative to the total weight of carbon black and silica, by thermomechanically kneading the whole until a maximum temperature T1 is reached which is greater than or equal to the melting temperature of the thermoplastic elastomer comprising at least one polyether elastomer block and at least one non-styrene thermoplastic block,
(b) reducing the temperature of the mixture obtained in step (a) to a maximum temperature T2 below the melting temperature of the thermoplastic elastomer comprising at least one polyether elastomer block and at least one non-styrene thermoplastic block, then incorporating a crosslinking system into the mixture and mixing the whole.

15. Rubber article according to Claim 14, wherein the temperature T1 is at least 1°C higher, preferably 5°C to 20°C higher, than the temperature of the thermoplastic elastomer comprising at least one polyether elastomer block and at least one non-styrene thermoplastic block, and the temperature T2 is less than 100°C, preferably within a range extending from 20°C to 90°C.
